# EUROPÄISCHE PATENTANMELDUNG

(11) **EP 1 167 928 A2**
(43) Veröffentlichungstag der Anmeldung: **02.01.2002**
(21) Anmeldenummer: 01113874.0
(22) Anmeldetag: 07.06.2001
(51) Int. Cl.: G01D 5/249

(54) **Taktlineal oder Taktscheibe**

(30) Priorität: 20.06.2000 DE 10029380
(71) Anmelder: PWB-Ruhlatec Industrieprodukte GmbH, 99846 Seebach (DE)
(72) Erfinder: Braun, Paul-Wilhelm, 53842 Troisdorf (DE)
(74) Vertreter: Müller-Wolff, Thomas, Dipl.-Ing.

(57) **Zusammenfassung**

Die Erfindung betrifft eine Taktscheibe oder Taktlineal, bestehend aus einem Träger, auf dem mindestens eine Codespur einer ersten Gruppe und darüber überlappend eine oder mehrere Codemarkierungen angeordnet sind, die von mindestens einer Sensoreinheit zur Erzeugung von Signalen abgetastet werden, wobei in der nachfolgenden Codespur oder in den Codespuren im Vergleich zur ersten Gruppe eine unterschiedliche optische Dichte vorhanden ist und wobei die Codemarkierungen innerhalb einer Codespur überlappen. Mit den der Sensoreinheit entnommenen Signalen erfolgt eine zwei- oder mehrkanalige Auswertung von optischen Signalen, wobei die Code-Markierungen der ersten Gruppe einen konstanten Abstand untereinander aufweisen, während die nachfolgenden Gruppen mit geänderten Code-Makierungen über die CodeSpuren der ersten Gruppe verteilt sind und wobei Segmente zur Steuerung unterschiedlicher Funktionen auf der Taktscheibe oder dem Taktlineal gebildet werden.

## Beschreibung

Die Erfindung betrifft eine Taktscheibe oder ein Taktlineal bestehend aus einem Träger, auf dem in mindestens einer Code-Spur eine erste Gruppe von Codemarkierungen angeordnet ist, die über mindestens eine Sensoreinheit zur Erzeugung eines digitalen Signals abgetastet wird.

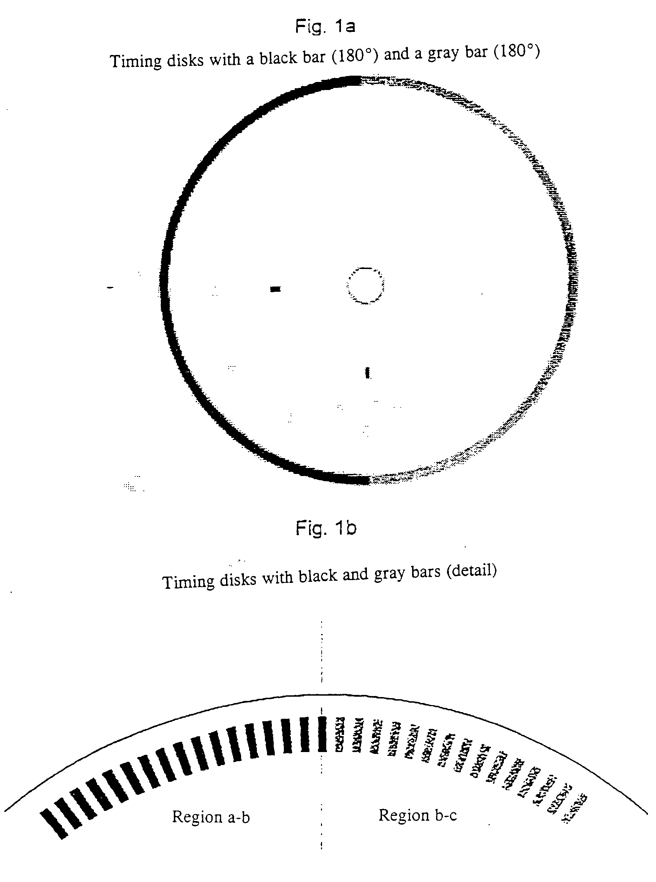

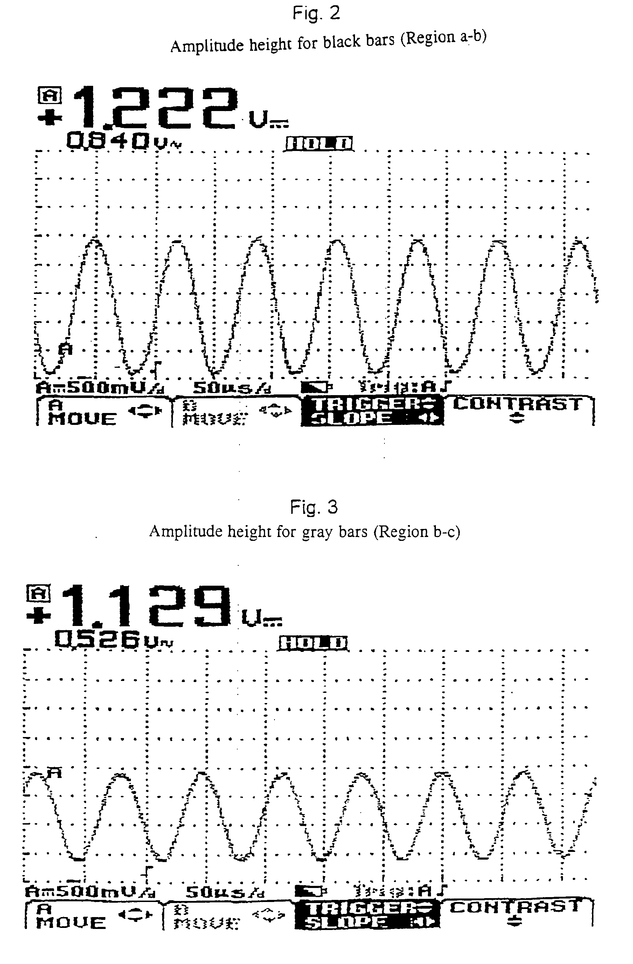

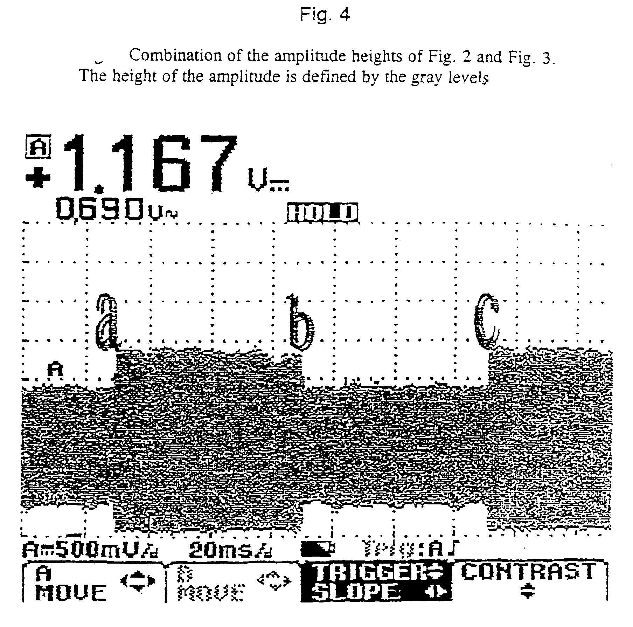

Eine Taktscheibe oder ein Taktlineal der eingangs genannten Art ist aus der US-PS 5,508,088 (PWB-Grundpatent) bekannt. Gemäß einem Ausführungsbeispiel der bekannten Einrichtung sind 3 Code-Spuren konzentrisch zueinander mit unterschiedlichen Markierungen auf einer Taktscheibe angeordnet. Zum Abtasten der 3 Spuren sind 3 Sensoreinheiten erforderlich, die analog zu der bekannten Einrichtung gemäß Figur 1a, 1b oder 2a, 2b anzuordnen sind. Dies bedeutet, daß zum Abtasten von mehreren Spuren auf einer Taktscheibe mehrere Sensoreinheiten in radialer Richtung nebeneinander angeordnet sind, wodurch die Baugröße der gesamten Abtasteinrichtung erheblich zunimmt. Darüberhinaus werden bei mehreren Sensoreinheiten die Schaltungen aufwendiger und die Störauffälligkeit bei Erschütterungen vergrößert. Die erhöhte Anzahl der Bauteile und die kompliziertere Soft-Ware führt zu vermehrten Fehlerquellen. Dieses ist bei der Weiterentwicklung von Druckern, Scannern und Kopierern von erheblichem Nachteil. In der Praxis zeigen sich Alterungen des Trägers, die zu einer Materialtrübung führen, oder auch Verschmutzungen, die speziell bei offenen Systemen wie Tintenstrahldruckern auftreten können. In beiden Fällen kommt es zu Fehlmeldungen, wenn der Sensor die Fehlstellen als Code-Markierung identifiziert.

Aufgabe der vorliegenden Erfindung ist es, Taktscheiben bzw. Taktlineale derart weiter zu entwickeln, die einen robusten Aufbau und die konstruktionsbedingt weniger Fehlerquellen aufweisen und die durch einfache, materialspezifische und schalttechnische Maßnahmen eine getrennte Erfassung mehrerer optischer Signale mittels einer Sensoreinheit gleichzeitig ermöglichen. Ferner sollen kontinuierliche Signalverstärkungen, wie z. B. bei Potentionmeter-Systemen und es sollen Positionsmeßgeräte z. B. in Form eines Lenkwinkelsensors technisch einfach zu wirtschaftlichen Bedingungen herstellbar sein.

Diese Aufgabe wird erfindungsgemäß durch die in den Patentansprüchen angegebenen Merkmale gelöst. Es hat sich gezeigt, daß sich zwei oder mehr Gruppen von Code-Markierungen unabhängig voneinander mittels einer Sensoreinheit detektieren lassen, wenn deren Code-Marken eine unterschiedliche, optische Dichte aufweisen. "Optische Dichte" bedeutet dabei ein Graustufung von etwa 100 % (schwarzgrau) bis etwa 0 % (volltransparent, vollreflektierend). Die Absolutpositionierung erfolgt vorzugsweise nicht über Balken, sondern über die zu- oder abnehmende Grautönung. Dabei ändert sich der Schwärzungsgrad, so daß die Signale mit starker Intensität bei geringer Grautönung und mit schwacher Intensität bei starker Grautönung oder umgekehrt vom Sensor erzeugt werden.

Durch eine zwei- oder mehrkanalige Sensoreinheit können die unterschiedlichen Gruppen der Code-Markierungen in einer Spur gleichzeitig abgetastet werden. Es ist ferner möglich, daß die Gruppen von Code-Markierungen untereinander überlappen. Es reicht aus, wenn die Sensoreinheit eine deutliche Veränderung der optischen Dichte feststellt, so daß eine entsprechende geänderte Spannung von der Sensoreinheit erfasst wird. Als geeignete Spannungsdifferenz wurden z. B. 100 µV ermittelt, es können aber auch andere Differenzen je nach Empfindlichkeit der Meßeinrichtungen verwendet werden.

Geeignete Sensoreinheiten bestehen aus LED oder anderer Lichtquelle und aus Phototransistoren oder anderen lichtempfindlichen Abtasteinrichtungen. Zur Steuerung von Anfangs- und/oder Endpositionen oder zur Kalibrierung können diese Sensoreinheiten Signale mit konstantem Abstand oder mit beliebigen Abständen über ganze Segmentbereiche der Taktscheibe oder der Taktlineale erfaßt werden.

Im folgenden wird die Erfindung anhand mehrerer Ausführungsbeispiele näher erläutert.

Es zeigen:
- Figur 1: Segment einer Taktscheibe mit unterschiedlichen Gruppen von Code-Markierungen,
- Figur 2: Abtastsignal aus einer Sensoreinheit beim Abtasten einer ersten Gruppe von Code-Markierungen,
- Figur 3: Abtastsignal aus einer Sensoreinheit beim Abtasten einer zweiten Gruppe von Code-Markierungen,
- Figur 4: Zusammenfassung der Abtastsignale aus Fig.2 und Fig. 3.

In Figur 1 ist das Segment einer Taktscheibe mit schwarzgrau und hellgrau gefärbten Codebalken dargestellt. Die Graufärbung ist so abzustufen, daß eine Alterung bzw. Verschmutzung der Taktscheibe nicht zu fehlerhaften Abtastsignalen führt. Die Abtastsignale der Bereiche a-b, b-c aus dem in Figur 1 dargestellen Segment der Taktscheibe werden in den Spannungs-Frequenz-Bildern gemäß Figur 2 und 3 aufgezeichnet. Man erkennt, daß im Bereich a-b einer hohen Signalspannung entsprechend große Amplitude (wegen der Schwarzfärbung der Balken) anfällt, während im Bereich b-c nur die einer verminderten Signalspannung entsprechende Amplitude (aufgrund der weniger stark gefärbten Codebalken) erfaßt wurde. Analog gilt dies auch für reflektierende Taktscheiben.

Die folgende Beschreibung soll das Prinzip der Positionierungsmessung an einem Beispiel weiter erläutern. Positionsmesseinrichtungen sollen eine berührungslose photoelektrische Abtastung eines inkrementalen Maßstabes ermöglichen, wobei eine hohe Meßgenauigkeit eingehalten werden muß. Durch schalttechnische Maßnahmen ist es möglich, z. B. phasenvervielfachende Schaltungen oder Potentiometerschaltungen über eine Veränderung der Teilungsabstände der Code-Markierungen zu ermöglichen. Besteht die Teilung aus gleichgroßen, aufeinanderfolgenden hellen und dunklen Feldern, dann wird ein über diese Teilung hinweggehender Phototransistor eine Sinusspannung erzeugen, deren Wellenlänge der Summe der beiden Längen eines hellen und dunklen Feldes entspricht. Es ist auch möglich, die bereits vorhandenen Teilungsabstände nocheinmal zu unterteilen, so daß eine Potentiometer Schaltung entsteht.

Bei der Standardtaktscheibe bleibt das Signal in der Intensität konstant. Bei einem Analog-Sensor, z. B. vom Typ Hewlett Packard (Agilent Technologies) - Q9846+0007 werden zusätzliche Impulse zur Kalibrierung ohne zusätzliche Code-Spuren erzeugt. Ein daraus gewonnenes Analog-Signal kann für den Papiervorschub, den Zeilenanschluß oder die Absolutpositionierung bei Druckern, Scannern oder Kopierern verwendet werden.

Erfindungsgemäß wird nun zusätzlich zu den bestehenden Signalen aus der ersten Gruppe von Code-Marken eine weitere Variable eingeführt, z. B. die Veränderung des Grautons der Code-Marken. Der Grauton bestimmt die Lichtdurchlässigkeit oder die optische Dichte und damit die Amplitude des Signals. Damit ist es möglich, jede Winkelstellung als Absolutpositionierung zu erkennen und ebenso Zwischenstufen nach Art eines optischen Potentiometers.

Über die Abstufung der Grautöne können beliebige Zwischenschritte codiert werden. Damit lassen sich Segmente einer Taktscheibe oder eines Taktlineals definieren, die mit weiteren Funktionen verknüpft sind.

Im folgenden werden Beispiele für eine mehrkanalige Auswertung der erfindungsgemäßen Taktscheibe dargestellt, wobei der Aufbau eines mehrkanaligen Taktlineals in analoger Weise erfolgt.

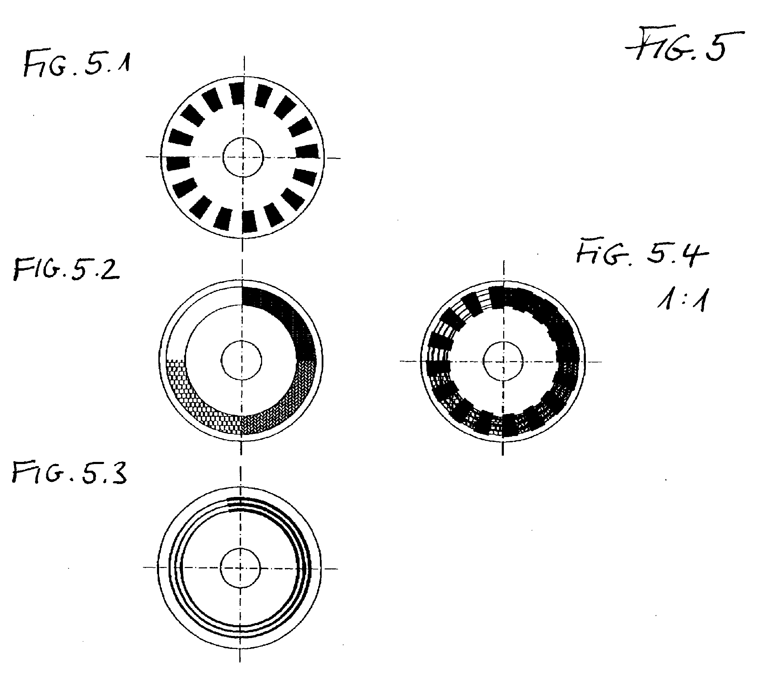

Die Überlagerung verschiedener Code-Markierungen zeigt Figur 5 in symbolhafter Form. Es handelt sich um drei unterschiedliche Code-Spuren die durch ein Subtraktions- oder ein Additionsverfahren auf eine Taktscheibe übertragen werden. Dabei überlagern sich die jeweiligen Code-Strukturen.
Im Einzelnen zeigen:
Figur 5.1 eine Balkenstruktur mit schwarzen Balken und gleichmäßigen Abständen über den Umfang der Taktscheibe
Figur 5.2 eine Code-Spur, die durch vier einzelne Balken in vier Segmente geteilt wird, die untereinander verschiedene aber innerhalb eines Segmentes jeweils gleichmäßigen Grauton aufweisen Figur 5.3 eine Code-Spur mit einem sich kontinuierlich über den Umfang ändernden Farbton. Der Farbton kann durch einen Filter erzeugt werden.
In Figur 5.4 sind die einzelnen Code-Spuren aus den Figuren 5.1, 5.2, 5.3 überlagert worden zu einer Gesamtstruktur. Diese vereinigt alle Signale aus den drei Einzelspuren in sich und bietet damit für die Sensoreinheit eine gesamteinheitliche Informationseinheit. Durch Subtraktion des Grautones von den schwarzen Balken lassen sich vier Segmente mit vier verschiedenen grauen Balken differenzieren. Bei der entsprechenden Einstellung der Sensoreinheit ist es möglich, eine dritte auswertbare Spur zu erzeugen. Dies geschieht durch Addition einer über den Umfang der Taktscheibe kontinuierlich sich ändernden Farbe, die mit der Grundstruktur überlagert ist.

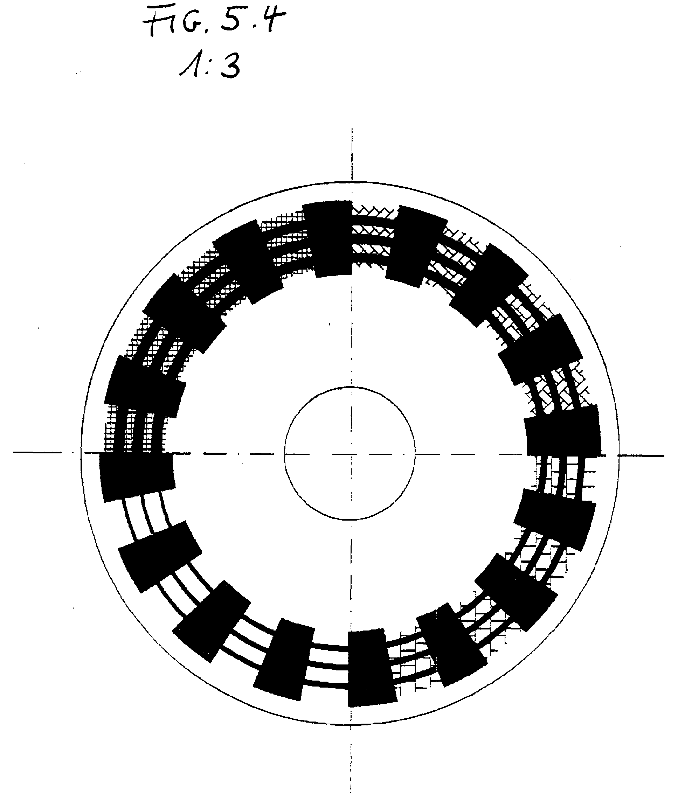

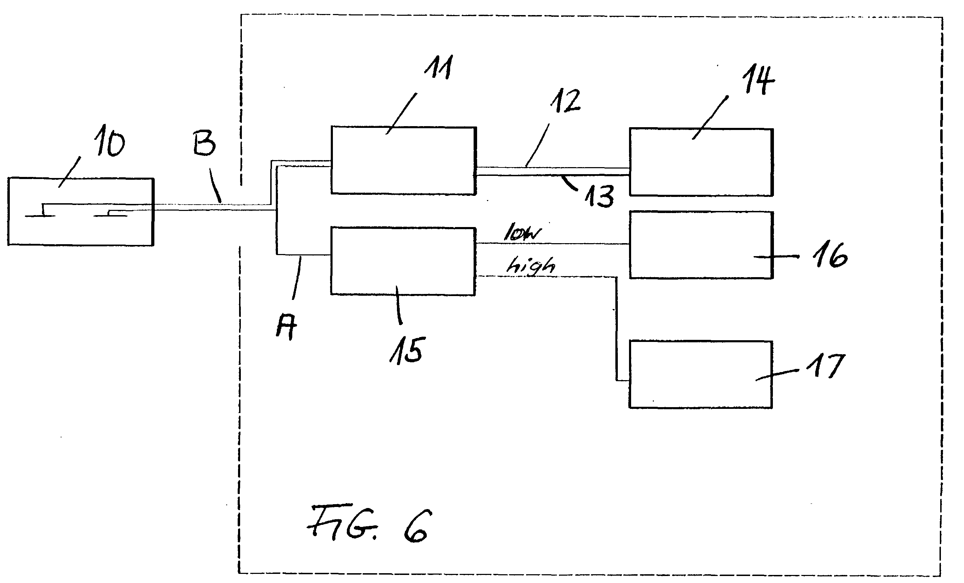

Für die vorstehend beschriebene mehrspurige Anordnung von Code-Markierungen ist eine besondere mehrkanalige Auswertung erforderlich. Diese wird nachfolgend anhand der Figur 6 erläutert.

Die Sensoreinheit 10 enthält mehrere Sensorflächen entsprechend der Anzahl der auszuwertenden Code-Spuren. Die Sensorflächen sind mit einer entsprechenden Anzahl von Kanälen, im vorliegenden Beispiel 2 Kanäle für die Analogsignale A und B, verbunden.

Über die zwei Kanäle werden die um 90° phasenverschobenen Signale A und B an einen Komparator 11 geleitet. Dieser bildet aus den Analogsignalen digitale Signale 12,13 die ebenfalls phasenverschoben sind. Hieraus lassen sich mit der Auswerteeinheit 14 die inkrementalen Impulse der Signale 12,13 bzw. die Frequenz der Balkenstruktur und mittels bekannter integrierter Schaltkreise, z.B vom Typ LS 7084 die Drehrichtung aus der Phasenverschiebung der Signale A und B bestimmen.

Einer der Kanäle z.B. der Kanal für das Signal A führt zu einer Amplitudenmessung,
(Messeinheit 15). Diese erkennt den unteren Grenzwert der Amplitude (Low-Amplitude) und den oberen Grenzbereich (High-Amplitude) und liefert diese Werte getrennt in eine Auflösungseinheit 16 und 17.

Die Auflösungseinheit 16 erkennt die Balkengrau-Tönung aus der Low-Amplitude. Je dunkler eine Code-Spur wird, desto geringer wird ihre Spannung in der Spannungs-Amplitudendarstellung. Damit lässt sich die Absolutposition bei einer Taktscheibenumdrehung bestimmen. Wenn es sich um vier unterschiedliche Segmentbereiche wie im vorhergehenden Beispiel handelt, liegt die Auflösungsgenauigkeit innerhalb dieser vier Segmente.

Die Auswertung einer Farbänderung erfolgt in der Auswerteeinheit 17. Aus den oberen Grenzwerten der High-Amplitude wird nach dem jeweiligen Spannungs-Amplituden-Verlauf die Absolutposition der Taktscheibe festgestellt, wobei die Auflösungsgenauigkeit innerhalb eines Balkenbereiches liegt. Diese Auflösung ist daher quasi analog.

Über die Abstufung der Grautöne können beliebige Zwischenschritte codiert werden. Damit lassen sich Segmente einer Taktscheibe oder eines Taktlineals definieren, die mit weiteren Funktionen verknüpft sind.

Es ist vorteilhaft, aber nicht unbedingt erforderlich, wenn die Signale der ersten Gruppe von Code-Marken eine konstante Periodenlänge aufweisen, die vom Grauton unabhängig ist. Selbstverständlich lassen sich derartige Steuerungen aufgrund unterschiedlicher Lichtdurchlässigkeiten auch auf Taktscheiben oder Taktlineale mit Schlitzmarken für Photointerrupter oder anderen analogsignal-erzeugenden Einrichtungen übertragen.

## Patentansprüche

1. Taktscheibe oder Taktlineal, bestehend aus einem Träger, auf dem mindestens eine Codespur einer ersten Gruppe und darüber überlappend eine oder mehrere Codemarkierungen angeordnet sind, die von mindestens einer Sensoreinheit zur Erzeugung von Signalen abgetastet werden, wobei in der nachfolgenden Codespur oder in den Codespuren im Vergleich zur ersten Gruppe eine unterschiedliche optische Dichte vorhanden ist und wobei die Codemarkierungen innerhalb einer Codespur überlappen,
**dadurch gekennzeichnet,**
**dass** mit den der Sensoreinheit entnommenen Signale eine zwei- oder mehrkanalige Auswertung von optischen Signalen erfolgt, wobei die Code-Markierungen der ersten Gruppe einen konstanten Abstand untereinander aufweisen, während die nachfolgenden Gruppen mit geänderten Code-Makierungen über die Code-Spuren der ersten Gruppe verteilt sind und wobei Segmente zur Steuerung unterschiedlicher Funktionen auf der Taktscheibe oder dem Taktlineal gebildet werden.

2. Taktscheibe oder Taktlineal nach Anspruch 1,
**dadurch gekennzeichnet,**
**daß** die Code-Markierungen der zweiten und nachfolgenden Gruppe zur Steuerung einer Anfangs- und/oder Endposition, zur Kalibrierung oder zur Absolutpositionierung verwendet werden.

3. Taktscheibe oder Taklineal nach einem der vorhergehenden Ansprüche,
**dadurch gekennzeichnet,**
**daß** der Träger der Taktscheibe oder des Taktlineals aus einem reflektierenden Material besteht und daß die Code-Markierungen sich im Reflexionsgrad unterscheiden.

4. Taktscheibe oder Taktlineal nach einem der vorhergehenden Ansprüche,
**dadurch gekennzeichnet,**
**daß** für jede Signalgruppe eine Sensorfläche in der Sensoreinheit existiert, mit der die Signale aufgenommen und über entsprechende Leitungen an einen Komparator und eine Amplituden-Messeinrichtung weitergeleitet werden und daß aus den Digital-Signalen und deren Phasenverschiebungen die Drehrichtung oder Bewegungsrichtung der Taktscheibe oder des Taktlineals bestimmt wird.

5. Taktscheibe oder Taktlineal nach einem der vorhergehenden Ansprüche,
**dadurch gekennzeichnet,**
**daß** aus der Amplitudenmesseinheit Low- Amplitudensignale und High-Amplitudensignale abgeleitet werden, die zur Absolutpositionierung herangezogen werden.

6. Taktscheibe oder Taktlineal nach einem der vorhergehenden Ansprüche,
**dadurch gekennzeichnet,**
**daß** das High-Amplitudensignal für eine Positionsbestimmung innerhalb der Balkenstruktur verwendet wird.

7. Taktscheibe oder Taktlineal nach einem der vorhergehenden Ansprüche,
**dadurch gekennzeichnet,**
**daß** Low-Amplitudensignal für eine Positionsbestimmung innerhalb der Segmentstruktur verwendet wird.
